(19) **Europäisches Patentamt / European Patent Office / Office européen des brevets**

(11) **EP 2 618 925 B1**

(12) **FASCICULE DE BREVET EUROPEEN**

(45) Date de publication et mention de la délivrance du brevet:
**12.04.2017 Bulletin 2017/15**

(21) Numéro de dépôt: **11761550.0**

(22) Date de dépôt: **20.09.2011**

(51) Int Cl.:
**B01J 4/02** *(2006.01)* **B01J 19/00** *(2006.01)*

(86) Numéro de dépôt international:
**PCT/EP2011/066290**

(87) Numéro de publication internationale:
**WO 2012/038408 (29.03.2012 Gazette 2012/13)**

(54) **DISPOSITIF ET PROCEDE DE PRODUCTION DE SUSPENSIONS OU DE PATES HUMIDES DE NANOPOUDRES OU DE POUDRES ULTRAFINES**

VORRICHTUNG UND VEFAHREN ZUR HERSTELLUNG VON SUSPENSIONEN AUS NANOPULVERN ODER ULTRAFEINEN PULVERN

DEVICE AND METHOD FOR PRODUCING NANOPOWDER OR ULTRAFINE-POWDER SUSPENSIONS OR SLURRIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2010 FR 1057561**

(43) Date de publication de la demande:
**31.07.2013 Bulletin 2013/31**

(73) Titulaire: **Commissariat à l'Énergie Atomique et aux Énergies Alternatives 75015 Paris (FR)**

(72) Inventeurs:
• **MASKROT, Hicham 91310 Montlhery (FR)**
• **GUIZARD, Benoît F-94000 Créteil (FR)**

(74) Mandataire: **Ilgart, Jean-Christophe BREVALEX 95, rue d'Amsterdam 75378 Paris Cedex 8 (FR)**

(56) Documents cités:
| | |
|---|---|
| WO-A1-2007/068805 | DE-A1-102006 055 703 |
| GB-A- 2 067 908 | US-A- 4 012 209 |
| US-A1- 2009 062 407 | US-B2- 7 097 691 |

**Description**

**DOMAINE TECHNIQUE**

L'invention concerne un dispositif et un procédé permettant d'obtenir des suspensions ou des pâtes humides contenant des particules nanométriques (< 100 nanomètres), également appelées nanoparticules ou nanopoudres, ou des particules submicrométriques (100-500 nanomètres), également appelées particules ou poudres ultrafines.

Dans la suite de la description, on considérera, à titre d'exemple et pour simplifier la description, des particules nanométriques ou « nanoparticules ».

**ÉTAT DE LA TECHNIQUE ANTÉRIEURE**

En raison de leurs propriétés spécifiques, les nanoparticules connaissent un engouement croissant depuis plusieurs années. En effet, les nanoparticules ou nanopoudres sont utilisées en tant que matière première ou comme matériau fini dans des industries diverses, telles que l'aéronautique (en tant que nanocomposite), l'automobile (pour la réalisation de pneumatiques, de peintures et de catalyseurs), l'énergie (le nucléaire, le photovoltaïque, la pétrochimie), la cosmétique (en tant qu'agent de structure ou barrière UV), la microélectronique (composant, outil) et l'agroalimentaire.

Les nanopoudres sont très souvent utilisées et conservées sous forme de suspensions.

Cela est dû au fait que, le plus souvent, la mise en oeuvre ou le conditionnement des nanopoudres passe par une étape de mise en suspension des nanoparticules dans des solvants ou des formulations très variés. L'élaboration et la stabilisation de ces suspensions est donc une étape clef de la mise en oeuvre et du conditionnement des nanopoudres. A titre d'exemple, on peut citer le cas des crèmes solaires minérales, dans lesquelles la qualité dans le temps du produit va dépendre, entre autres, de la bonne dispersion de la phase active, constituée par les nanopoudres (le plus souvent, l'oxyde de titane $TiO_2$), dans une formulation.

D'autre part, certains procédés d'élaboration des nanopoudres, comme par exemple le procédé d'infiltration par électrophorèse ou EPI, requièrent la préparation de suspensions de nanoparticules, qui doivent présenter des propriétés spécifiques, notamment en termes de stabilité, de viscosité, de mobilité et de concentrations en nanopoudres.

L'optimisation des suspensions de nanopoudres est également primordiale dans des procédés de microélectronique dérivés des technologies de l'imprimerie par « jet d'encre », telles que le « roll to roll », le « microcontact printing » ou encore le « stamp printing », qui sont utilisées au cours de la réalisation de circuits imprimés, de cellules photovoltaïques ou d'écrans plats.

Enfin, il se trouve que la mise en suspension des nanopoudres est aussi un gage de sécurité au travail, puisque les risques de dispersion des nanopoudres dans les voies respiratoires de l'homme sont alors écartés.

La mise en suspension des nanoparticules peut aussi être utilisée comme moyen de récupération des nanoparticules.

A ce propos, on rappelle que les différents dispositifs de récupération des nanoparticules qui existent peuvent être regroupés en trois groupes, selon leur mode de récupération des nanoparticules : les modes de récupération en voie liquide (suspensions), en voie humide (pâte humide) et en voie sèche.

Les dispositifs de récupération des nanoparticules par voie sèche fonctionnent avec des procédés en voie gazeuse. Ces dispositifs sont particulièrement adaptés pour récupérer les nanoparticules qui sont produites dans un flux gazeux ; ils utilisent généralement des dispositifs de récupération en voie solide, qui comprennent des collecteurs à barrières filtrantes qui permettent de stopper les nanoparticules, tout en laissant s'échapper les gaz produits par le procédé. Ces dispositifs peuvent également utiliser des dispositifs à cyclones ou des dispositifs électrostatiques.

Dans ces dispositifs de récupération, des étapes de collecte en voie sèche des nanoparticules sont toujours réalisées lorsque les collecteurs sont pleins, afin de mettre les nanoparticules dans des sacs ou des conteneurs.

Or, de telles étapes de collecte présentent un risque d'exposition aux nanoparticules très élevé pour le personnel ayant cette charge. En effet, les collecteurs sont alors ouverts et, du fait de l'importante volatilité des nanoparticules (qui sont souvent sous forme agglomérée), elles ont tendance à être mises en suspension instantanément dans l'air et peuvent donc facilement être aéroportées vers les voies d'entrée du corps humain (narines, bouche, oreilles...).

Un moyen pour assurer la protection du personnel concerné consiste à les équiper de combinaisons intégrales et d'appareils respiratoires ayant une capacité de filtration adéquate ou fonctionnant avec un apport d'air provenant d'un circuit autonome.

Mais de tels équipements constituent un surcoût important, tant au niveau du temps d'intervention, qui est augmenté, qu'au niveau de l'achat et de l'entretien des combinaisons et des appareils (filtres...).

En outre, du fait de leur volatilité, ces nanoparticules peuvent se déposer en différents endroits dans les installations, si aucune mesure n'est prise en ce qui concerne leur confinement.

Cela constitue un risque supplémentaire pour le personnel en charge du nettoyage des installations, mais aussi pour l'environnement puisqu'il se produit une pollution des eaux, de l'air et des sols.

D'autre part, les moyens de confinement à mettre en oeuvre constituent également un surcoût important à la conception des installations, mais aussi au fonctionnement de celles-ci, dû en partie à la nécessité d'un remplacement des filtres et de contrôles fréquents.

Un risque supplémentaire apparait lorsqu'on manipule des nanoparticules dites « non oxydes », du fait de leur forte réactivité. En effet, une fois que les nanoparticules ont été mises dans des sacs ou des conteneurs, elles sont ensuite introduites dans des procédés ayant pour vocation de les transformer en vue d'obtenir un produit ayant des propriétés (mécaniques, thermiques, électriques, magnétiques, optiques...) optimisées.

Les sacs ou les conteneurs contenant les nanoparticules sont alors ouverts et les mêmes mesures de précaution que celles mentionnées précédemment s'imposent, ce qui conduit encore à un surcoût.

Un mode alternatif à la récupération en voie sèche des nanoparticules est la collecte en voie liquide, qui, comme son nom l'indique, consiste à mettre les nanoparticules en suspension dans un liquide.

Cette mise en suspension peut se faire soit en continu au cours de la production des nanoparticules, soit après la production.

Dans le cas d'une mise en suspension dans un mode continu, cette mise en suspension des nanoparticules dans un liquide peut se faire par simple bullage en utilisant un diffuseur, comprenant un manchon percé d'une multitude de trous, qui permet de maximiser la surface d'échange entre le flux gazeux et le flux liquide, comme décrit dans le document **[1]** référencé à la fin de la description.

Dans ce même document **[1]**, il est également décrit que la mise en suspension des nanoparticules dans un liquide peut aussi être obtenue en atomisant le liquide dans le flux gazeux comprenant les nanoparticules à l'aide d'une buse fontaine.

Les deux solutions proposées dans le document **[1]** s'avèrent peu performantes dans le cas d'une production en masse de nanoparticules, c'est-à-dire pour une production de nanoparticules supérieure à 100g/h de poudre pour 100 L de liquide dans le réservoir. En effet, la mouillabilité des nanoparticules n'est alors pas suffisante pour permettre une bonne captation des particules par le liquide lorsque le flux de gaz comprend plus de $12.10^4$ particules par litre.

La mise en suspension des nanoparticules peut aussi être obtenue par précipitation d'une vapeur de précurseurs à travers un brouillard de solvant dans un conduit relié à une pompe centrifuge qui aspire à la fois le liquide et les particules (document **[2]**). La pompe renvoie par la suite le liquide et les poudres dans un réservoir contenant un solvant. L'évacuation de la pompe est préférentiellement immergée dans le liquide contenu dans le réservoir. Le gaz porteur qui peut être chargé de nanoparticules est ensuite évacué dans l'atmosphère. Dans ce document **[2]**, les auteurs font référence à une récupération des nanoparticules contenues dans le gaz porteur par effet venturi et précisent qu'un simple bullage ne permet pas de piéger toutes les nanoparticules.

Afin d'améliorer l'efficacité de récupération des nanoparticules, il est fréquemment fait usage de système d'atomisation produisant de fines gouttelettes (document **[3]**). Ces systèmes d'atomisation sont systématiquement des buses d'injection qui peuvent être de différentes natures (buse fontaine, buse ultrasonique, buse piézoélectrique).

Cependant, les buses d'injection nécessitent souvent l'utilisation de liquides ou de gaz ayant une pression élevée, allant jusqu'à plusieurs centaines de bars. Or l'utilisation de pressions élevées est soumise à une réglementation contraignante en termes de sécurité.

De plus, les buses d'injection génèrent un jet conique, qui nécessite donc d'être bien orienté. Cette caractéristique d'orientation et de forme des jets produits par les buses d'injection peut favoriser la présence de zone sans aérosol.

Enfin, un autre inconvénient des buses est qu'elles sont souvent obstruées en présence de poudres.

Le document **[4]** décrit un dispositif et un procédé de collecte de particules en suspension dans un gaz en projetant ledit gaz sur un film de liquide formé par écoulement du liquide à travers un matériau poreux.

Face à tous ces inconvénients de l'art antérieur, les inventeurs se sont fixé comme but de concevoir un dispositif et un procédé permettant la récupération de nanoparticules et de particules ultrafines de manière sécurisée sous forme de suspensions (on parle alors de voie liquide) ou de pâtes humides (on parle alors de voie humide).

On rappelle que la voie humide est caractérisée par une teneur massique en solvant (par exemple de l'eau) comprise entre 1 et 10%, tandis que la voie liquide est caractérisée par une teneur massique en solvant (par exemple de l'eau) comprise entre 80 et 99,9 %. On rappelle également que la teneur massique correspond au rapport de la masse de solvant sur la masse de la suspension totale (c'est-à-dire du solvant et de la poudre).

## EXPOSÉ DE L'INVENTION

Ce but est atteint grâce à un dispositif de production d'une suspension ou d'une pâte humide de particules de tailles nanométriques ou submicrométriques selon la revendication 1, comprenant :

- une enceinte ayant un premier et un deuxième compartiment disposés l'un au dessus de l'autre ;
- un moyen de filtrage disposé dans l'enceinte entre le premier et le deuxième compartiments, ledit moyen étant apte à empêcher le passage de particules de tailles nanométriques ou submicrométriques, tout en permettant le passage d'un fluide, d'un compartiment à l'autre ;

- un moyen d'introduction d'un flux de particules de tailles nanométriques ou submicrométriques ayant une masse volumique apparente comprise entre 15 et 100g/L, situé dans le premier compartiment ;
- un moyen d'évacuation de gaz, situé dans le deuxième compartiment ;
- un moyen d'injection d'au moins un fluide, situé dans le deuxième compartiment, apte à créer un flux sortant au niveau du moyen de filtrage, le flux sortant ayant un sens de circulation inverse par rapport à celui du flux créé par le moyen d'introduction d'un flux gazeux ;
- un moyen de sortie de la suspension ou de la pâte humide de particules ;

caractérisé en ce qu'il comprend en outre un moyen d'atomisation d'un solvant sous forme liquide ou gazeuse, pour former, dans le premier compartiment, un brouillard formé de gouttelettes de tailles comprises entre 1 et 10 micromètres, le moyen d'atomisation d'un solvant et le moyen de filtrage étant un même élément qui comprend un filtre à très haute efficacité selon la norme européenne EN 1882, ayant un seuil de filtration inférieur ou égal à 200 nm.

Dans ce qui précède et ce qui suit, le terme « taille », appliqué à des particules, désigne la plus grande dimension de ces particules ; le terme « nanométrique », appliqué à des particules, signifie que la taille est inférieure à 100 nanomètres ; le terme « submicrométrique », appliqué à des particules, signifie que la taille est comprise entre 100 et 500 nanomètres.

Pour déterminer la taille des particules, on peut par exemple procéder de la manière suivante. Tout d'abord, on mesure la surface spécifique des particules par la méthode BET (méthode de Brunauer, Emmet et Telier) qui fournit le rapport surface/poids (unité $m^2/g^{-1}$) des particules. Puis, on mesure la masse volumique des particules de poudre par la méthode de pycnométrie à l'hélium, qui fournit le poids des particules par unité de volume. Le pycnomètre à hélium permet de déterminer la masse volumique d'un matériau massif, divisé ou poreux à partir de la mesure très précise du volume d'un échantillon de masse connue. Enfin, on calcule le diamètre moyen des particules en considérant que chaque particule est sphérique.

Pour déterminer la taille des gouttelettes, on peut par exemple utiliser la méthode de mesure de granulométrie laser par diffusion de lumière.

Par ailleurs, on précise que l'efficacité d'un filtre représente la variation de particules entre l'amont et l'aval du filtre par rapport à la concentration initiale en particules en amont du filtre, c'est-à-dire :

$$E = \frac{C_O - C_F}{C_O}$$

$C_O$ représentant la concentration en particules en amont du filtre et $C_F$ représentant la concentration en particules en aval du filtre, c'est-à-dire la concentration après filtrage.

Aussi, lorsque l'on précise que le filtre utilisé dans l'invention est un filtre à très haute efficacité selon la norme européenne EN 1822, l'homme du métier sait quelles caractéristiques maximales doit respecter ce filtre.

Les caractéristiques des filtres à très haute efficacité sont mesurées par la méthode de mesure d'efficacité MPPS (Méthode d'essai par captage laser), qui détermine l'efficacité d'un filtre sur les particules les plus pénétrantes ayant un diamètre compris entre 0,1 et 0,2 micromètres.

Les caractéristiques distinctives des filtres à très haute efficacité sont présentées sous forme de tableau en Annexe de cette description.

Dans le cadre de cette invention, on considérera que l'on a une suspension lorsque le pourcentage de solvant est compris entre 80% et 99,9% et que l'on a une pâte humide lorsque le pourcentage de solvant est compris entre 1 et 10%.

On précise que, lorsque le solvant est introduit dans le deuxième compartiment sous forme gazeuse, il peut sortir sous forme de gouttelettes au niveau du filtre ou du premier compartiment du fait de la condensation du solvant, si la température du premier compartiment et de la poudre sont inférieures à la température de rosée du solvant. En effet, dans le cas où la poudre et le premier compartiment (filtres y compris) sont à une température située en dessous de la température de rosée du solvant, le solvant sous forme gazeuse se condense à la sortie du filtre, voire au contact de celui-ci. C'est pour cela que lorsqu'on utilise un solvant sous forme gazeuse, il est préférable de chauffer l'ensemble du dispositif ou de procéder à l'humidification de la poudre juste après sa synthèse, car l'ensemble (filtre, enceinte et poudre fraîchement élaborée) est encore très chaud (entre 100 et 150°C).

D'autre part, il est à noter que les limites de la gamme de valeurs des masses volumiques apparentes des particules selon l'invention, c'est-à-dire entre 15 et 100 g/L, sont choisies avec soin. En effet, elles sont choisies de manière à ce qu'il y ait toujours plus de 97 % du volume du premier compartiment du dispositif qui soit occupé par du gaz, un liquide ou du vide, afin que le solvant introduit dans le premier compartiment sous forme de gouttelettes puisse entourer et emprisonner chaque particule de poudre.

En effet, la densité d'une poudre est intrinsèque à la nature de la poudre et au mode de synthèse de celle-ci. Par exemple, les nanopoudres de SiC qui sont synthétisées par pyrolyse laser et qui ont une taille de grains de 35 nm, ont une masse volumique apparente de 45 g/l. De même, pour une poudre de SiC synthétisée par pyrolyse laser et ayant une taille de grains de l'ordre de 20 nm, la masse volumique apparente est de 25 g/l.

Sachant que la masse théorique d'un bloc plein de SiC de 1 litre est de 3200 g et que l'on a, pour 1 litre de la poudre SiC dont les grains sont de 35 nm, une masse volumique de 45 g, on sait que seul 1,4% (c'est-à-dire $(45/3200) \times 100$) du volume est occupé par la poudre. Par conséquent, la majeur partie du volume est occupé par du gaz ou du vide.

De même, en utilisant la poudre de SiC ayant des grains de 20 nm, la poudre occupe alors 0,78% du volume.

Avantageusement, le fluide injecté par le moyen d'injection est un solvant liquide à température ambiante, le fluide étant injecté sous forme liquide ou sous forme gazeuse et formant le brouillard de gouttelettes à sa sortie du filtre.

Avantageusement, le filtre à très haute efficacité est un filtre métallique.

De préférence, le filtre a des pores dont la taille est inférieure ou égale à 200 nm.

De préférence, le filtre comporte une ou plusieurs colonnes dont la surface est munie de pores.

Avantageusement, le premier compartiment est situé au dessous du deuxième compartiment. Le premier et le deuxième compartiment sont donc respectivement situés dans la partie inférieure et dans la partie supérieure de l'enceinte.

Avantageusement, le premier compartiment a un volume intérieur qui est au moins deux fois plus grand que le volume intérieur du deuxième compartiment.

L'invention concerne également un procédé de production d'une suspension ou d'une pâte humide de particules de tailles nanométriques ou submicrométriques, par utilisation d'un dispositif tel que défini ci-dessus. Le procédé selon l'invention comprend les étapes successives suivantes :

a) introduction d'un flux de particules de tailles nanométriques ou submicrométriques dans le premier compartiment de l'enceinte du dispositif ayant une masse volumique apparente comprise entre 15 et 100g/L ;

b) formation, dans le premier compartiment, d'un brouillard de gouttelettes ayant une taille comprise entre 1 et 10 micromètres, par injection d'un solvant sous forme liquide ou sous forme gazeuse dans le deuxième compartiment et passage dudit solvant au travers du moyen de filtrage, le solvant étant choisi parmi les solvants qui sont liquides à température ambiante et à pression atmosphérique ;

c) arrêt de la formation du brouillard lorsque la totalité de la quantité de particules contenue dans le premier compartiment forme, au choix, avec le solvant, une suspension ayant une teneur massique en solvant entre 80 et 99%, lorsque le solvant est introduit dans le deuxième compartiment sous forme liquide, ou une pâte humide ayant une teneur massique en solvant entre 1 et 10%, lorsque le solvant est introduit dans le deuxième compartiment sous forme gazeuse ;

d) récupération de la suspension ou de la pâte humide ainsi formée.

Avantageusement, la formation du brouillard à l'étape b) est obtenue par application d'une différence de pression entre le premier compartiment et le deuxième compartiment, la pression étant plus faible dans le premier compartiment.

Le dispositif et le procédé selon l'invention permettent la récupération indirecte en voie liquide (suspension) ou en voie humide (pâte humide) de quantités importantes ou non de particules de tailles nanométriques ou submicrométriques, c'est-à-dire des quantités pouvant aller jusqu'à plusieurs dizaines de kilogrammes ; en fait, comme les valeurs de masse volumique apparente doivent être comprises entre 15 et 100 g/L, on constate que seul le dimensionnement des premier et deuxième compartiments va limiter la quantité de poudre. Par exemple, lorsque le premier compartiment a un volume de 150 L, on peut y introduire jusqu'à 7kg de poudre. On précise que le volume du deuxième compartiment dépend de la quantité de solvant (par exemple de l'eau) que l'on doit y introduire.

Contrairement aux dispositifs de l'art antérieur où la mise en suspension des particules en voie liquide se fait en continu, ce qui conduit à des dispositifs qui sont très coûteux et qui ne sont pas forcément très efficaces dans le cadre d'une production supérieure à 1 kg/h de poudres, et *a fortiori* dans le cadre d'une production de 5 à 10 kg/h, le dispositif et le procédé selon l'invention permettent une récupération post-synthèse ou une récupération indirecte des nanoparticules, ce qui est une alternative nettement moins onéreuse et plus efficace.

Un autre des avantages du procédé et du dispositif selon l'invention est qu'ils permettent d'éviter d'avoir à manipuler des poudres de particules en voie sèche. En effet, en utilisant, d'une part, de la poudre de particules ayant une valeur de masse volumique comprise entre 15 g/L et 100 g/L (ce qui correspond à des espaces inter particules très importants) et en utilisant, d'autre part, un filtre à très haute efficacité dont le seuil de filtration inférieur ou égal à 200 nm comme moyen d'atomisation de solvant sous forme liquide ou comme moyen de diffusion de vapeur du solvant sous forme gazeuse (permettant ainsi d'obtenir un brouillard de microgouttelettes), on obtient ainsi une bonne dispersion du solvant au sein du réseau formé par les particules de poudre. La suspension ou la pâte humide ainsi obtenue peut donc contenir une grande quantité de particules tout en ne comportant aucune particule en voie sèche.

La suspension ou la pâte humide peut par la suite être envoyée vers un système de granulation des particules de tailles nanométriques ou submicrométriques (par atomisation-séchage ou par séchage à froid, c'est-à-dire « freeze-drying » en anglais), vers un système permettant la fonctionnalisation des particules de tailles nanométriques ou submicrométriques (par exemple par plasma froid) ou encore vers un dispositif de caractérisation des particules (par granulométrie, turbidimètre, viscosimètre, spectromètre...).

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée d'une figure, qui est un schéma, selon une vue en coupe, du dispositif de production selon l'invention.

## EXPOSÉ DÉTAILLÉ D'UN MODE DE RÉALISATION PARTICULIER

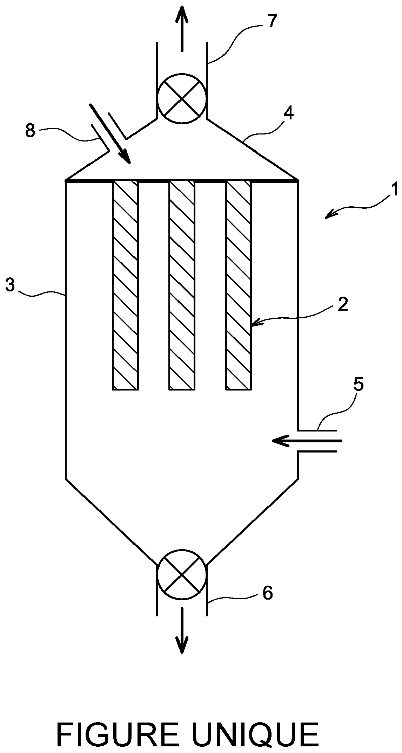

Comme illustré dans la figure, l'enceinte 1 est équipée d'un filtre 2.

Lorsque le filtre 2 est positionné dans l'enceinte, il sépare l'espace intérieur de l'enceinte en deux compartiments : un premier compartiment 3 situé dans la partie inférieure de l'enceinte et un deuxième compartiment 4 situé dans la partie supérieure de l'enceinte.

L'enceinte peut être constituée de deux corps (l'un formant la partie supérieure et l'autre la partie inférieure de l'enceinte) vissable l'un dans l'autre ; le filtre peut alors être vissé sur l'un des corps et être à son tour vissé sur l'autre corps.

Dans notre exemple particulier, l'enceinte 1 est par exemple un collecteur de grande capacité, ayant un volume interne de 135 litres, tandis que le filtre 2 est ici formé d'un ensemble de cinq cartouches filtrantes métalliques de très haute efficacité. Le volume occupé par les filtres au sein de l'enceinte est d'environ 5 litres (c'est-à-dire $5\times0,98$ L).

Le filtre étant de très haute efficacité, chaque cartouche filtrante a un seuil de filtration inférieur ou égal à 200 nm.

L'enceinte comporte une ouverture 5, située dans le premier compartiment, permettant l'entrée d'un flux de particules dans l'enceinte, une ouverture 6, située elle aussi dans le premier compartiment et de préférence au niveau le plus bas du premier compartiment, permettant la sortie de la suspension ou de la pâte humide à la fin du procédé et équipée d'une vanne, une ouverture 7 située dans le deuxième compartiment, permettant l'évacuation de gaz de l'enceinte, lui aussi équipé d'une vanne, et une ouverture 8, située dans le deuxième compartiment, permettant l'entrée d'un fluide dans l'enceinte.

Selon l'invention, le filtre joue à la fois le rôle de moyen de filtrage d'un flux comportant des particules et le rôle de moyen d'atomisation d'un solvant sous forme liquide ou sous forme gazeuse pour former un brouillard de gouttelettes de solvant.

Comme la poudre de particules a une masse volumique apparente comprise entre 15 et 100 g/L, il y a beaucoup d'espace entre les particules. Les gouttelettes vont donc avoir accès à un maximum de surface des particules et les particules vont, au final, être emprisonnées par les gouttelettes : la poudre ne sera donc plus pulvérulente et les particules ne seront plus aéroportées. Le produit récupéré en fin de procédé, suspension ou pâte humide, sera donc plus facile à manipuler sans risques.

En ce qui concerne le solvant utilisé, il peut être choisi parmi de l'eau, des alcools, des cétones ou tout autre solvant compatible chimiquement avec des métaux et les poudres produites.

Le solvant peut être utilisé seul ou avec un dispersant, comme par exemple la polyéthylimine.

L'amélioration de la dispersion des particules peut être obtenue par l'ajout de dispersants divers dans le solvant (le choix s'effectuant en fonction de la nature du solvant et des particules), mais aussi par l'utilisation d'un barreau magnétique, placé dans le fond du premier compartiment de l'enceinte.

Le solvant, avec ou sans dispersant, se trouve dans un réservoir (non représenté) situé en aval du filtre, dont le volume est défini par la quantité de solvant à injecter dans l'enceinte. Une vanne sépare le réservoir de l'enceinte.

Le solvant pénètre dans l'enceinte par l'ouverture 8 située dans le deuxième compartiment.

L'introduction du solvant se fait par injection du solvant dans l'enceinte. Cette injection peut par exemple être obtenue en mettant sous vide l'enceinte, puis en ouvrant la vanne de séparation entre l'enceinte et le réservoir de solvant, ce qui a pour effet d'introduire le solvant liquide dans l'enceinte par aspiration.

Il est également possible de pousser le solvant liquide dans l'enceinte par application d'une pression via l'injection dans l'enceinte d'un gaz neutre sous pression, par exemple de l'argon jusqu'à 20 L/min (6 bars). Le débit d'argon est ensuite maintenu pendant quelques minutes après avoir vidé le réservoir de solvant (environ 5 minutes), afin de favoriser la diffusion du solvant dans l'ensemble du volume laissé libre par le réseau formé par les grains de poudres.

Il est à noter que, dans le cas de l'utilisation d'un gaz de poussée, la vanne d'évacuation de l'ouverture 7 doit être ouverte.

A titre d'exemple, pour une production de 5 kg de particules de tailles nanométriques, le volume de solvant doit être respectivement de 50 L et de 33 L pour obtenir des suspensions à 10% et 15% en masse de particules de carbure de silicium de taille 35 nm et en envoyant le solvant dans le deuxième compartiment sous forme liquide.

Le solvant sous forme gazeuse est obtenu en chauffant le solvant avant son introduction dans l'enceinte, par exemple en utilisant un générateur de vapeur.

Dans le cas d'une introduction en phase vapeur du solvant dans l'enceinte, il est préférable d'équiper l'enceinte d'un système de régulation de débit massique à effet thermique, d'un système de contrôle d'évaporation et de mélange (CEM) et d'un débitmètre massique numérique pour liquides à effet Coriolis.

Si l'on utilise des filtres métalliques, il est possible d'introduire dans l'enceinte des solvants en phase gazeuse chauffés à des températures supérieures à 100°C.

Pour récapituler, contrairement à l'art antérieur, la production d'une suspension ou d'une pâte humide ne se fait pas en continu de la synthèse des particules, mais après la synthèse de ces dernières.

On commence par introduire la totalité des particules produites dans le premier compartiment de l'enceinte sous forme d'un flux. Il est également possible de tirer au vide l'enceinte, préalablement à l'introduction du solvant sous forme liquide ou sous forme gazeuse, ce qui a pour effet d'améliorer la dispersion du solvant.

Lorsque les particules sont introduites dans le premier compartiment, le filtre joue le rôle de filtre : il permet, dans un premier temps, de filtrer les particules présentes dans le flux de particules.

Lorsqu'on introduit un solvant sous forme liquide dans le deuxième compartiment, le filtre joue alors le rôle d'atomiseur : il permet d'atomiser le solvant en gouttelettes de tailles comprises entre 1 et 10 micromètres par introduction du solvant, sous forme liquide, à travers le filtre en contre-sens de la filtration des particules.

Lorsqu'on introduit un solvant sous forme gazeuse dans le deuxième compartiment, le filtre joue le rôle de diffuseur du solvant sous forme de vapeur.

En fin de procédé, on peut récupérer la suspension ou la pâte humide ainsi produite en ouvrant la vanne au niveau de l'ouverture 6 située dans le fond du premier compartiment de l'enceinte.

## BIBLIOGRAPHIE

[1] WO 2007/068805 A1
[2] US 7,097,691 B2
[3] US 6, 156, 120
**[4]** US 4,012,209

**ANNEXE**

| Classification des filtres très haute efficacité selon la norme EN 1822 | | | | | | | |
|---|---|---|---|---|---|---|---|
| Norme EN 1822 | | valeurs intégrales MPPS* * * | | | valeurs locales MPPS* * * | | |
| Groupe de filtre | Classe de filtre | Efficacité minimale (%) | Pénétration maximale (%) | Coefficient d'épuration minimal | Efficacité minimale (%) | Pénétration maximale (%) | Coefficient d'épuration minimal |
| HEPA* | H10 | 85 | 15 | 6,7 | - | - | - |
| | H11 | 95 | 5 | 20 | - | - | - |
| | H12 | 99,5 | 0,5 | 200 | - | - | - |
| | H13 | 99,95 | 0,05 | 2 000 | 99,75 | 0,25 | 400 |
| | H14 | 99,995 | 0,005 | 20 000 | 99,975 | 0,025 | 4 000 |
| ULPA** | U15 | 99,9995 | 0,0005 | 200 000 | 99,9975 | 0,0025 | 40 000 |
| | U16 | 99,99995 | 0,00005 | 2 000 000 | 99,99975 | 0,00025 | 400 000 |
| | U17 | 99,999995 | 0,000005 | 20 000 000 | 99,9999 | 0,0001 | 1 000 000 |
| * HEPA : filtre à haute efficacité (« High Efficiency Particulate Air filter » en anglais) * * ULPA : filtre à ultra efficacité (« Ultra Low Pénétration Air filter » en anglais) * * * MPPS : taille de particule la plus pénétrante (« Most penetrating particule size » en anglais) | | | | | | | |

(Source France AIR).

## Revendications

**1.** Dispositif de production d'une suspension ou d'une pâte humide de particules de tailles nanométriques , c'est à dire de taille inférieure à 100 nm, ou submicrométriques , c'est à dire de taille comprise entre 100 et 500 nm, comprenant :

- une enceinte (1) ayant un premier (3) et un deuxième (4) compartiment disposés l'un au dessus de l'autre ;
- un moyen de filtrage disposé dans l'enceinte entre le premier et le deuxième compartiments, ledit moyen étant apte à empêcher le passage de particules de tailles nanométriques ou submicrométriques, tout en permettant le passage d'un fluide, d'un compartiment à l'autre ;
- un moyen d'introduction (5) d'un flux de particules de tailles nanométriques ou submicrométriques ayant une masse volumique apparente comprise entre 15 et 100g/L, situé dans le premier compartiment (3) ;
- un moyen d'évacuation de gaz (7), situé dans le deuxième compartiment ;
- un moyen d'injection (8) d'au moins un fluide, situé dans le deuxième compartiment (4), apte à créer un flux sortant au niveau du moyen de filtrage (2), le flux sortant ayant un sens de circulation inverse par rapport à celui du flux créé par le moyen d'introduction (5) d'un flux gazeux ;
- un moyen de sortie (6) de la suspension ou de la pâte humide de particules ;

**caractérisé en ce qu'**il comprend en outre un moyen d'atomisation d'un solvant sous forme liquide ou gazeuse, pour former, dans le premier compartiment (3), un brouillard formé de gouttelettes de tailles comprises entre 1 et 10 micromètres, le moyen d'atomisation d'un solvant et le moyen de filtrage étant un même élément qui comprend un filtre (2) à très haute efficacité, selon la norme européenne EN 1822, ayant un seuil de filtration inférieur ou égal à 200 nm.

**2.** Dispositif selon la revendication 1, dans lequel le fluide injecté par le moyen d'injection est un solvant liquide à température ambiante, le fluide étant injecté sous forme liquide ou sous forme gazeuse et formant le brouillard de gouttelettes à sa sortie du filtre.

**3.** Dispositif selon la revendication 1, dans lequel le filtre à très haute efficacité (2) est un filtre métallique.

**4.** Dispositif selon la revendication 1, dans lequel le premier compartiment (3) est situé au dessous du deuxième compartiment (4).

**5.** Procédé de production d'une suspension ou d'une pâte humide de particules de tailles nanométriques ou submicrométriques, par utilisation d'un dispositif tel que défini dans l'une quelconque des revendications 1 à 4, le procédé comprenant les étapes successives suivantes :

a) introduction d'un flux de particules de tailles nanométriques ou submicrométriques dans le premier compartiment (3) de l'enceinte (1) du dispositif ayant une masse volumique apparente comprise entre 15 et 100g/L ;
b) formation, dans le premier compartiment (3), d'un brouillard de gouttelettes ayant une taille comprise entre 1 et 10 micromètres, par injection d'un solvant sous forme liquide ou sous forme gazeuse dans le deuxième compartiment (4) et passage dudit solvant au travers du moyen de filtrage, le solvant étant choisi parmi les solvants qui sont liquides à température ambiante et à pression atmosphérique ;
c) arrêt de la formation du brouillard lorsque la totalité de la quantité de particules contenue dans le premier compartiment (3) forme, au choix, avec le solvant, une suspension ayant une teneur massique en solvant comprise entre 80 et 99,9%, lorsque le solvant est introduit dans le deuxième compartiment (4) sous forme liquide, ou une pâte humide ayant une teneur massique en solvant comprise entre 1 et 10%, lorsque le solvant est introduit dans le deuxième compartiment (4) sous forme gazeuse ;
d) récupération de la suspension ou de la pâte humide ainsi formée.

**6.** Procédé selon la revendication 5, dans lequel la formation du brouillard à l'étape b) est obtenue par application d'une différence de pression entre le premier compartiment (3) et le deuxième compartiment (4), la pression étant plus faible dans le premier compartiment.

**Patentansprüche**

1. Vorrichtung zur Erzeugung einer Suspension oder einer feuchten Paste von Partikeln mit Nanometergrößen, das heißt mit einer Größe kleiner als 100 nm, oder mit Submikrometergrößen, das heißt einer Größe, die zwischen 100 und 500 nm enthalten ist, umfassend:

   - ein Gehäuse (1) mit einem ersten (3) und einem zweiten (4) Fach, die übereinander angeordnet sind;
   - eine Filtereinrichtung, die in dem Gehäuse zwischen dem ersten und dem zweiten Fach angeordnet ist, wobei die Einrichtung dazu ausgelegt ist, den Durchgang von Partikeln mit Nanometer- oder Submikrometergrößen zu verhindern, jedoch den Durchgang eines Fluides von einem Fach zum anderen zu erlauben;
   - eine Einrichtung (5) zum Einleiten eines Flusses von Partikeln mit Nanometer- oder Submikrometergrößen mit einer Rohdichte, die zwischen 15 und 100 g/L enthalten ist, die in dem ersten Fach (3) angeordnet ist;
   - eine Einrichtung zum Abführen von Gas (7), die in dem zweiten Fach angeordnet ist;
   - eine Einrichtung zum Injizieren (8) wenigstens eines Fluids, die in dem zweiten Fach (4) angeordnet und dazu ausgelegt ist, einen Ausgangsfluss im Bereich der Filtereinrichtung (2) zu erzeugen, wobei der Ausgangsfluss eine Zirkulationsrichtung hat, die entgegengesetzt ist zu jener des Flusses, welcher durch die Einrichtung (5) zum Einleiten eines Gasflusses erzeugt ist;
   - eine Einrichtung zum Ausleiten (6) der Suspension oder der feuchten Paste von Partikeln;

   **dadurch gekennzeichnet, dass** sie ferner eine Einrichtung zum Zerstäuben eines Lösungsmittels in flüssiger oder gasförmiger Form umfasst, um in dem ersten Fach (3) einen Nebel zu bilden, der durch Tröpfchen mit Größen gebildet ist, die zwischen 1 und 10 Mikrometern enthalten sind, wobei die Einrichtung zur Zerstäubung eines Lösungsmittels und die Filtereinrichtung ein- und dasselbe Element sind, das einen Filter (2) mit sehr hoher Effizienz gemäß der europäischen Norm EN 1822 umfasst, der eine Filtrationsschwelle kleiner oder gleich 200 nm hat.

2. Vorrichtung nach Anspruch 1, wobei das durch die Injektionseinrichtung injizierte Fluid ein Lösungsmittel ist, welches bei Umgebungstemperatur flüssig ist, wobei das Fluid in flüssiger Form oder in gasförmiger Form injiziert wird und bei seiner Ausleitung aus dem Filter den Tröpfchennebel bildet.

3. Vorrichtung nach Anspruch 1, wobei der Filter mit sehr hoher Effizienz (2) ein Metallfilter ist.

4. Vorrichtung nach Anspruch 1, wobei das erste Fach (3) unter dem zweiten Fach (4) angeordnet ist.

5. Verfahren zur Herstellung einer Suspension oder einer feuchten Paste von Partikeln mit Nanometer- oder Submikrometergrößen unter Verwendung einer Vorrichtung, wie in einem der Ansprüche 1 bis 4 definiert, wobei das Verfahren die folgenden Schritte nacheinander umfasst:

   a) Einleiten eines Flusses von Partikeln mit Nanometer- oder Submikrometergrößen in das erste Fach (3) des Gehäuses (1) der Vorrichtung mit einer Rohdichte, die zwischen 15 und 100 g/L enthalten ist;
   b) Bilden, in dem ersten Fach (3), eines Nebels von Tröpfchen mit einer Größe, die zwischen 1 und 10 Mikrometern enthalten ist, durch Injektion eines Lösungsmittels in flüssiger Form oder in gasförmiger Form in das zweite Fach (4) und Durchgang des Lösungsmittels durch die Filtereinrichtung hindurch, wobei das Lösungsmittel ausgewählt ist aus den Lösungsmitteln, die bei Umgebungstemperatur und bei Atmosphärendruck flüssig sind;
   c) Stoppen der Nebelbildung, wenn die Gesamtmenge von Partikeln, die in dem ersten Fach (3) enthalten sind, wahlweise mit dem Lösungsmittel eine Suspension bildet, die einen Lösungsmittel- Massengehalt zwischen 80 und 99,9 Prozent hat, wenn das Lösungsmittel in das zweite Fach (4) in flüssiger Form eingeleitet wird, oder eine feuchte Paste mit einem Lösungsmittel- Massengehalt zwischen 1 und 10 Prozent, wenn das Lösungsmittel in das zweite Fach (4) in gasförmiger Form eingeleitet wird;
   d) Auffangen der derart gebildeten Suspension oder der feuchten Paste.

6. Verfahren nach Anspruch 5, wobei die Bildung des Nebels im Schritt b) erhalten wird durch Anlegen einer Druckdifferenz zwischen dem ersten Fach (3) und dem zweiten Fach (4) wobei der Druck in dem ersten Fach kleiner ist.

**Claims**

1. Device for producing a suspension or a wet paste of particles of nanometric size, in other words with a size of less than 100 nm, or particle of submicrometric size, in other words with a size of between 100 and 500 nm, comprising:

- a chamber (1) having a first (3) and a second (4) compartment placed one above the other;
- filtering means arranged in the chamber between the first and second compartments, said means being suitable for preventing the passage of particles of nanometric or submicronic size, while enabling the passage of a fluid, from one compartment to the other;
- means (5) for introducing a flow of particles of nanometric or submicronic size having a bulk density between 15 and 100g/L, situated in the first compartment (3);
- means (7) for discharging gas, situated in the second compartment;
- means (8) for injecting at least one fluid, situated in the second compartment (4), suitable for creating an output flow from the filtering means (2), the output flow having a direction of circulation opposite to a direction of the flow created by the means (5) for introducing a gas flow;
- means (6) for outputting the suspension or wet paste of particles;

**characterised in that** it further comprises means for atomising a solvent in liquid or gas form to form, in the first compartment (3), a spray formed of droplets with sizes between 1 and 10 micrometres, the means for atomising a solvent and the filtering means being a single element that comprises a high-efficiency filter (2) according to European standard EN 1822, with a filtration threshold of less than or equal to 200 nm.

2. Device according to claim 1, wherein the fluid injected by the injection means is a liquid solvent at ambient temperature, the fluid being injected in liquid form or in gaseous form and forming the spray of droplets at its exit from the filter.

3. Device according to claim 1, wherein the high-efficiency filter (2) is a metallic filter.

4. Device according to claim 1, wherein the first compartment (3) is below the second compartment (4).

5. Method for producing a suspension or wet paste of particles of nanometric or submicronic size, using a device according to any of claims 1 to 4, the method comprising the following successive steps:

a) introducing a flow of particles of nanometric or submicrometric particles with a bulk density of between 15 and 100 g/L into the first compartment (3) of the chamber (1) of the device;
b) forming, in the first compartment (3), a spray of droplets with size between 1 and 10 micrometres, by injecting a solvent in liquid or gas form into the second compartment (4) and passing said solvent through the filtering means, the solvent being chosen from the solvents which are liquid at ambient temperature and at atmospheric pressure;
c) stopping the formation of the spray when the entire quantity of particles contained in the first compartment (3) forms with the solvent either a suspension with a mass content of solvent of between 80 and 99.9% if the solvent is introduced into the second compartment (4) in liquid form, or a wet paste with a mass content of solvent equal to between 1 and 10% if the solvent is introduced into the second compartment (4) in gas form;
d) recovering the suspension or wet paste thus formed.

6. Method according to claim 5, wherein the formation of the spray in step b) is obtained by applying a pressure differential between the first compartment (3) and the second compartment (4), the pressure being lower in the first compartment.

FIGURE UNIQUE

**EP 2 618 925 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007068805 A1
- US 7097691 B2
- US 6156120 A
- US 4012209 A